# EUROPEAN PATENT APPLICATION

(11) **EP 3 335 574 A1**
(43) Date of publication of application: **20.06.2018**
(21) Application number: 17460022.1
(22) Date of filing: 13.04.2017
(51) Int. Cl.: A23L 3/40, A23B 7/02, A23B 9/08

(54) **DEVICE AND METHOD OF DEHYDRATION OF BIOLOGICAL PRODUCTS**

(30) Priority: 19.12.2016 PL 41987416
(71) Applicant: Wicherski, Jan, 87-100 Torun (PL)
(72) Inventor: Wicherski, Jan, 87-100 Torun (PL)
(74) Representative: Golebniak, Andrzej

(57) **Abstract**

The subject matter of the invention is a process of dehydration of biological products using the pressurized drying method in which the product is treated with a gaseous medium the movement of which over the dried product is forced in a closed system under appropriate pressure, in the presence of a difference between the temperature of the medium circulating in the system and the temperature of the dried product until the product moisture content is reduced to the desired level, and in which the dehydration process is executed at a constant temperature of the atmosphere surrounding the material, preferably higher than its storage temperature but lower than the degradation temperature of its components.

In accordance with the essence of the invention, the process is carried out in a dehydration chamber where the dried product is placed on drying trays arranged on at least one rack with shelves fitted with heating surfaces, whereby at the beginning of the drying process the gaseous medium is nitrogen at a temperature of 30°C to 50°C, and at a pressure of 1.1 to 1.4 Pa inside the dehydration chamber, and the material undergoes two processes at the same time - the process of exposure to moving gas medium that flows through a biological product bed at superatmospheric pressure and at a preset temperature from 30° to 50° and the process of desorption drying caused by the shelves' heating surfaces.

The subject matter of the invention additionally includes a device for dehydration of biological products (particularly foods) using the method according to the invention, constituting a physically and thermally closed system consisting of an airtight dehydration chamber fitted with a door and connected by means of ducts with a condenser, inside of which a heat exchanger is placed connected with a heat generator located outside the system and horizontal drying trays arranged one above another, such device being fitted with means of delivering the required gases and/or bacteriostatic agents to the dehydration chamber as well as with a system for forcing the flow of the gaseous medium at a certain pressure; furthermore, the device has an automated stabilization and control system for monitoring dehydration process parameters.

According to the invention, the device has a heat exchanger in the form of the entire supporting structure of the rack filled with a heating fluid, and the exchanger is detachably connected via supply and discharge pipelines with a heater located outside the dehydration chamber, and additionally the device has a system for injecting nitrogen to the interior of the dehydration chamber, consisting of a nitrogen tank located outside the dehydration chamber, connected by means of ducts with injectors located near the floor of the dehydration chamber and additionally inside the dehydration chamber there are fans arranged in the rear wall of the chamber at the level of each shelf with drying trays.

## Description

The subject matter of the present invention is a method of dehydration of biological products and a device used for such dehydration, intended in particular for preservation by drying. The solution can be used with any soft foods, including in particular fresh or frozen fruits and vegetables, whether intended for direct consumption or as ingredients of ready-made mixtures of dried products, such as dried vegetables as an ingredient of soups, or dried fruits as an ingredient of muesli (mixture of cereal flakes, delicacies, nuts and dried fruits, usually consumed with milk or yoghurt).

Drying is one of the most important basic processes in the food industry and also one of the oldest methods of food preservation. Removal of water from food through evaporation has numerous beneficial effects of drying. First of all, reducing water content to more or less 10% slows down many chemical reactions. Microbial and mold growth is inhibited already when water content in the product is reduced to approximately 15%. To minimize enzymatic and non-enzymatic reactions it is necessary to reduce water content in the material to less than 5%, or even 1-2%.
As a result of dehydration the product becomes durable. Furthermore, its weight and volume are reduced, which facilitates and reduces the cost of packaging, transportation and storage. It is also possible to facilitate many food processing procedures by using dry components and to impart new characteristics to foods, to create new processes increasing the range of available food products.

The dehydration process does not protect products against oxidation (including in particular vitamin C oxidation or autoxidation of fats) occurring even in strongly dehydrated foods. Therefore it is necessary to use appropriate packaging to protect food against oxygen and against pests, humidity or reinfection. Other adverse changes that may occur in dehydrated products include protein denaturation, fiber and pectin crystallization, release of flavoring and aromatic substances, discoloration, loss of water solubility.

A number of methods for drying biological product (particularly fruits and vegetables) are known. The simplest known method is contact drying consisting in transferring heat to the product by direct contact with a pre-warmed surface, such as metal floor or shelves. Such drying takes place in an "open system", i.e. by using the flow of warm air alongside the surfaces of the dehydrated product, where air flow is not insulated from the surrounding atmosphere and exchange of air between the drying surface and ambient air is allowed.

Vegetables, fruits, granulated products or herbs are commonly dehydrated in contact drying chambers, where drying air temperature ranges from 40 to 140°C. Fuels used in such chambers include gas, oil or even pellets. Material dried inside the drying chamber is placed on dryer carts arranged in series on a runway. The drying process consists in consecutive supply of pre-warmed air under each drying tray through nozzles of diffusers positioned in side walls of the drying chamber. Spent air is directed outside the chamber through an outlet channel.
A heater and all components are located in the rear part of the dryer. An automated measurement system makes it possible to program the drying process according to individual recipes (e.g. temperature measurement, air flow rate and direction adjustment, or even temperature measurement on individual trays), input to the controller via a touch screen embedded in any place - for instance in the side wall, in the chamber door or on the control panel suspended on the side wall of the dryer.
Contact drying does not require constructing a classical drying chamber with its many elements, air distribution system, gates, drying chamber wall insulation, etc. It is sufficient to have a room protected against wind and rain, where a drying rack fitted with horizontal trays or drawers is installed. Humid material intended for drying is placed on such trays or drawers. A drying rack of this kind can be additionally fitted with a loading cart, which significantly speeds up the process of dried material loading and unloading. The drying rack may be fitted with a water heating system fed with steam or water. Drying temperature is controlled by means of flame height in the oven and water or steam flow rate. Hoods are often installed above drying racks to extract spent air from the room. Another solution used in drying racks is special heating trays with a monolithic labyrinth system in a tightly welded heating surface. Such trays have a directly embedded temperature sensor. They are made of metal sheet (1 to 2.5mm thick) and fitted with quick release couplings to connect water. As a result, the trays can be easily and quickly taken out of or inserted into the dryer.
Their undisputable advantage is direct contact of the processed (dried) material with hot surface, without any intermediate heat exchangers such as trays placed on heating levels. As a result, tray heating losses are eliminated.
Key advantage of contact drying racks is the low cost of their construction and operation, including in particular lower electricity consumption during operation as compared to chamber dryers. Another advantage is the possibility to constantly control the drying process without the need to open the gates, as is the case in chamber dryers. Yet another advantage is the so-called independent zone mode: depending on the needs, either the entire rack can be used, or a certain part of it (e.g. only a single tray).

Another common method of product dehydration is convection drying, whereby a hot gaseous medium (air or another gas) is blown at the dried material (in a chamber or on a belt). In this method, a gaseous medium is drawn from the outside and subsequently heated and then used to treat the product. Simultaneously, moisture from the inside of the heated product is collected and air is replaced, as a result product temperature and water content change.
The design of a typical, simplest tunnel dryer for convection drying resembles a chamber - a tunnel (a shaft) and is used for drying external surfaces of all kinds of materials, ranging from food products, fruits, vegetables, herbs, mushrooms, over to biomass, and over to painted clinker bricks, varnished facade tiles or resined car body parts. Depending on the device type, moist material to be dried is introduced into the chamber on carts with horizontal trays (sieves) or placed on drawers (usually perforated). The dryer is fitted with an air heater and a hose that delivers air into the chamber, a partial vacuum device (optionally a blower / exhaustor / extractor / vacuum pump / suction nozzle) and a spent air exhaust duct. The drying process temperature in devices of this kind ranges from 40°C to 100°C. The process consists in intercepting moisture from the dried material by the stream of air of appropriate temperature.
Heated air is distributed inside the chamber by means of splitters with diffusers positioned along the chamber. After having absorbed moisture, spent air is exhausted by means of fans. Furthermore, some convection drying chamber types are fitted with automated measurement devices that monitor the drying process and control supply and exhaust air temperature. The device described above operates in a batch mode. Products that are little sensitive to mechanical damage and can be heated directly by hot air or flue gases are dried in equally simple convective drum dryers. In such dryers, the drum rotates around its own axis. It is usually positioned at an angle to ensure longitudinal movement of the dried material. Inside the drum there are partitions of various shapes and positions. Moist material is placed in those partitions. Furthermore, the device has an opening for introducing products (moist product is fed from a feeding hopper) and an unloading auger used for removing dried material from the drum.
By way of example, the patent description PL.153870 (B1) teaches a drum dryer for manufacturing dried products, including in particular fruits, vegetables and mushrooms, fitted with electrical drive consisting of a motor connected with a driveshaft via a gearing and a clutch, characterized in that it constitutes a charging hopper set on a driveshaft, consisting of three concentric cylinders with meshed or perforated side surfaces, fitted with collecting blades, whereby the charging hopper is placed in a drum housing fitted with an inlet and outlet for dried material.
The herein described convective drying system does not yield the desired effects - it is not environmentally friendly and temperature is difficult to control. In addition, foods dried using this method undergo considerable changes. Namely, adverse changes in the texture of fruits and vegetables are observed, caused by gelatinization of starch, crystallization of cellulose and uneven evaporation of water in the drying process, which cause internal tensions. Foods dried in this way have a dry, shrunk and wrinkled appearance. In addition, its natural aroma and taste are changed (because in high temperatures not only water but also other volatile compounds evaporate), and the color is darker than the color of the original material. Convection dried products have a tendency to go dark and rancid. Furthermore, their rehydration is slow and never complete because they do not regain their original, firm texture typical of fresh material.

Much greater food drying efficiency is offered by low pressure drying. Unlike convective drying, low pressure drying does not involve the use of air as a drying medium. As a result, end product properties are superior to those obtained in convective drying.
One example of a low pressure dryer is the partial vacuum chamber dryer known from the patent description PL.210973 (B1), presented in drawing ***Pos. I,*** intended for drying plant, farm and forest foods, including in particular fruits, vegetables and mushrooms. The dryer is fitted with a vacuum chamber, heaters and sieve shelves. It incorporates a pressure reducing unit consisting of a turbine or a high performance suction pump. The two devices can either be integrated with the dryer or can be added to an existing dryer with an airtight chamber.
In such a case, one of dryer walls is fitted with a spigot that fits the suction inlet of the pressure reducing pump. The pressure reducing pump is connected with the drying chamber by means of a non-return valve that prevents sudden pressure surges inside the chamber. Furthermore, the dryer has a valve connecting its chamber with the atmosphere making it possible to suddenly increase chamber pressure, which results in steam condensation and reduces steam saturation inside the chamber. In addition, the dryer has a special tank (chamber) with calcium chloride (CaCl₂) that can be placed inside the product drying chamber or optionally outside it. If the calcium chloride unit is located outside the drying chamber, then both chambers are connected by means of a duct that evacuates moisture from the drying chamber to the calcium chloride chamber.
Moisture evacuation to the outside can be effected directly from the drying chamber or via the calcium chloride chamber. The same calcium chloride can be used repeatedly as long as it is reconditioned by drying. The dryer described above dries a batch of products in two hours, and if the calcium chloride chamber is used the drying time becomes considerably shorter.
Furthermore, the dryer described above has a stabilization and control system incorporating a temperature controller that stabilizes the tempe-limiter. Despite its simple design, the dryer ensures high drying efficiency and high dried product quality. Most vitamins, microelements and essential oils are preserved in the product. The dryer is used by small manufacturers and by households for drying all kinds of agricultural produce. It can also be used for industrial drying.

A commonly known low pressure drying process is sublimation (lyophilization), or freeze-drying. The process was used for the first time in the 1950s in the USA in a government-funded project aimed at manufacturing light-weight and nutrient-rich foods for the army and for astronauts. Currently foods of this kind are produced commercially and used mostly by people practicing extreme sports (including in particular mountain climbers, sailors, travelers), those participating in expeditions to places characterized by extreme weather or natural conditions (e.g. mountains above 5,500 m asl, glacier areas, jungle) where access to food is hardly available and food transport is difficult.
Lyophilization consists in extracting moisture, or water removal from a frozen product by way of ice sublimation, i.e. direct transition of ice crystals to vaporous form, without the liquid phase (ice does not melt). Such a process takes place below the so-called triple point, at which water liquid (fluid), solid and gaseous phases coexist. Water achieves its triple point at the temperature of 0.01°C and the pressure of 610 Pa. Sublimation can also occur at atmospheric pressure, but it is then very slow. To ensure satisfactory water removal rates, sublimation drying is carried out at a temperature below 0°C and at very low pressure, in the range of 15 to 150 Pa.
The lyophilization process is complex and multi-staged. It begins with preliminary freezing of the material at atmospheric pressure, in a freezer, at a temperature of -20 to -40°C. At this stage, ice crystals are formed which increases the concentration and viscosity of the remaining liquid phase. Once material temperature is reduced to a certain value (Tg'), the growth of ice crystals stops. A glass-like structure is formed among ice crystals.
Subsequently - in the second stage - frozen food is placed in a low pressure chamber, on shelves heated from the inside, where sublimation drying (or vacuum ice sublimation) is carried out (in high vacuum conditions, steam pressure above food surface is reduced to less than 6 - 10 Pa). At this stage, heat from the product is intensively evacuated and the product is dehydrated. Under such conditions, ice crystals in food sublimate, i.e. turn to steam without melting. Steam is removed from the chamber in a continuous manner by means of a condenser and a vacuum pump.
The next stage involves secondary drying of the material to the desired target moisture content (approximately 1 to 2% of water). This is a so-called desorption drying, whereby the product is heated to a temperature of 40 to 50°C, while pressure in the chamber remains low.
A sublimation dryer is a combination of a freezer with a vacuum dryer. It contains a vacuum chamber with trays for dried food, heaters supplying heat necessary for sublimation, a vapor condenser and a vacuum pump used to evacuate non-condensing gases.
It is generally accepted that sublimation drying is a water removal method that guarantees top quality products when compared to other drying methods. Namely, the nutritional values of the end product are relatively little changed compared to the original material, and its sensory features are generally acceptable. Sublimation-dried products have very low water content (1 - 2 %), which prevents the product from spoiling (if packed in air-tight packaging, products can be stored for many years in any weather conditions). Furthermore, products subjected to sublimation drying have the greatest known capability of rehydratation. In this way their original condition can be restored in just a few minutes after soaking with water.
Despite indisputable advantages, sublimation drying is considered to have certain defects. During the last stage of the sublimation process (i.e. secondary drying) significant loss of nutrients may occur and sensory properties of the dried material may deteriorate, because at this stage flavor ingredients are suctioned out and aromatic compounds are lost. Furthermore, sublimation also affects the product's stability during storage. Sublimation-dried foods may have varying appearance (including changed color), because colorants (i.e. carotenoids and chlorophyll) become decomposed, as a result of which products dried in this way become brighter. A disadvantage of lyophilized products is significant porosity, caused by empty spaces left after evaporation of ice crystals. Therefore, as a result of oxidation processes occurring in the product, its structure is often destroyed. Lyophilized products rarely preserve their original shape. In addition, dried material forms agglomerated structures and lumps.
Furthermore, lyophilized products have a strong tendency to go rancid.
Other disadvantages of this method include: high capital investment (approximately three times the cost of other types of dryers), high cost of energy (two or three times greater than in other methods), long time of the process (often approximately 24 hours). Therefore, the efficiency of dried foods production by sublimation on an industrial scale is low. For these reasons sublimation drying is rarely used. The method is limited to expensive products, such as extracts of coffee, tea, vegetable condiments such as parsley, dills or chives.
Sublimation drying, invented in the 1950s as a method for preserving biological products, has been improved ever since. For instance, the Korean patent description KR.100806484 (B1) teaches a method of lyophilization of shiitake (*Lentinula edodes*) mushrooms by means of UV radiation in order to kill fungal strains and to generate vitamin D, while preserving the original shape, taste and aroma. To that end, mushrooms are sterilized by means of UV radiation for a period of 20 to 60 minutes, then dried in hot air at 40°C for 1 to 2 hours, frozen at -40°C in one hour and then lyophilized at minus 40°C under reduced pressure 40 to 50 x10 ^ -3 for 21 to 48 hours, until moisture content in mushrooms drops below 12%.

In its turn, the French patent description FR.2093123 (A5) teaches a method of continuous processing of (preferably food) products that have been previously frozen and divided into small particles using the sublimation drying method. A device for implementing this method is also known. According to the description, the system consists of a horizontally arranged vacuum chamber, fixed rigidly to the floor, of cylindrical shape. Inside the chamber, a vibrating feeder carries product particles. Its vibrations are generated by a known blade device. Underneath the feeder, vibration trays are positioned at different levels one above another, at a slight angle to the vertical, resting on the surface via flexible suspensions. Each vibration tray corresponds to various product particle thicknesses. The thickness grows top-down. The lyophilized product is introduced in the chamber and carried by the vibrating feeder.
As a result of vibrations, product particles on the feeder move downwards in the direction of the outlet as a vibration deposit and move in a cascade manner between levels, falling consecutively on one tray after another. A top heating plate and bottom heating plates are positioned inside the chamber. Steam from the dried product is evacuated through a top opening to a condenser.
It is known that frozen product particles can have different sizes and that during intensive steam flow some of those particles (especially smaller ones) have a tendency to adhere to the internal walls of the housing and to "fly", and thus to dry out quickly.
Meanwhile, thanks to the graded vibrating plate according to the invention, the flow of steam originating from the product is essentially constant, from the top to the bottom. The stream of steam originating from dried product particles is gradually reduced (from the top to the bottom), as water content becomes lower. As a result, it is possible to achieve constant flow by adjusting the thickness of particle layers in an inverse relation to water content in product particles.
As a result, particle "flying" is not possible.
In one embodiment, the lyophilization device according to the invention FR.2093123 consists of as many as three vacuum chambers that are vertically displaced, i.e. arranged one above another and connected with one another by means of flexible connections. Each chamber contains a vibration plate and horizontal planes. The product to be lyophilized is introduced through an inlet first to the top chamber and removed through an outlet from the bottom chamber.
In this system, not only the vibration plate can vibrate, but the entire chamber housings as well. To that end, the housing of the first chamber is subjected to vibrations generated by traditional blades, while the other two chambers are moved by vibrations of external unbalanced motors (motor-powered vibration generators). The linear speed of product particles on trays is reduced from one chamber to another, top to bottom.
In this way, the particle layer thickness grows from one chamber to another and is adjusted to the average water content in those particles in a given chamber.

Another known method is radiation drying using infrared radiation as the source of heat generated by electric lamps or heaters. This method is used in tunnel dryers. The processed material is very quickly heated up and then dried. Radiation drying time depends on air flow velocity, radiation source power and its distance from the material. Greater air flow velocity reduces moisture removal rate, which increases drying time. The underlying reason is that the surface of the processed product is cooled down. Therefore, the effect of air how velocity on infrared drying kinetics is the opposite of the same effect in convective drying. It has been found that an increase in infrared radiation source power and reduced distance between processed material and infrared lamps increase drying speed and simultaneously reduce energy costs.
The instrumentation used for this type of drying is simple to operate and can be easily adjusted to changing conditions, dryers occupy little space. The method can be used for drying items of large surface or selected surface areas of large items.
Thermal radiation penetrates to a small depth, warming the product mostly on its surface. Therefore the method can be used for thin layers of the product or for materials previously dried using other methods (e.g. in combination with convective drying). For instance, scientific research has proven that the time of radiation drying combined with convective drying of fruits and vegetables such as carrots, potatoes or apples was by approximately 50% shorter than the time of convective drying.

Other methods of drying soft foods, including in particular fruits and vegetables, include microwave radiation (dielectric) drying. This method consists in using a high frequency electromagnetic field. An external electromagnetic field creates electrodynamic forces that cause dipoles present in the material to rotate and to arrange themselves in parallel to the direction of the electric field. As a result of the absorption of microwave energy by water particles contained in the product, liquid water begins to move towards the surface, thus promoting evaporation. If the field is alternating, particles move constantly which causes interparticle friction and generation of thermal energy in the product itself. During this process, the temperature inside the product is greater than on its surface.
As a result, adverse mechanical stress is eliminated and the resulting texture of the product is more valued by consumers than the texture of convection dried products. Microwave processing takes place in chambers, usually made of metal recesses, rotating drums or metal tunnels with conveyors moving the processed product through a microwave heating zone. The use of high power microwaves in such devices requires the design of the processing chamber to ensure efficient electromagnetic radiation screening.
One indisputable advantage of microwave food drying systems is their small size. Furthermore, the use of microwaves significantly shortens drying time, particularly if combined with convective drying, and allows for removing more moisture. Microwave drying is often accompanied by the so-called puffing effect, improving dried material's rehydration capability with simultaneous preservation of taste qualities.
However, the method is rarely used. It is usually used with fragmented products (e.g. in the form of cubes or flakes).

Another known solution is to use various kinds of vibrations for intensifying the transfer of momentum, heat and mass. In the drying industry, this tendency is manifested by the use of fluidized bed drying, consisting in forcing a bottom-up stream of pre-heated air through a layer of fine or granulated material placed on a perforated bottom plate. The air stream flow rate should be adjusted to ensure that the pressure drop is big enough to counter-balance the weight of the bed, so that the entire mass is lifted up and then scattered to form variously sized particles. Subsequently, the gas moves in the form of bubbles and the bed is reminiscent of a boiling liquid, forming a fluidized state.
Dried material in a fluidized state is intensively mixed and all particles are exposed to hot air. The temperature is uniform all over the dried material. This method is used for drying e.g. peas, rapeseed, beans, cereals or berries and the process is very fast.
Dryers used to induce fluidized state are characteristic for the greatest coefficients of heat and mass transfer compared to the input necessary to pump the gas. Therefore their operation is relatively inexpensive.

One of the efficient methods of dehydrating biological products that offers very promising results in the form of high quality dehydrated products that essentially preserve their original chemical composition, taste, aroma and color, is the solution known from the patent description PL.173722 (B1), also published as EP.0671884 (B1) and WO9413146 (A1). The subject matter of this invention is also a device for dehydrating biological products obtained using this method, as shown in ***Pos. II.***
In accordance with the description of the said solution, the material - including in particular a biological and/or chemical product - is treated with a gaseous medium, the movement of which is forced about the dried product in a closed system under pressure, with different temperatures of the medium circulating in the system, until the moisture content in the product is reduced to the desired level, which may be below 10%. The dehydration process is carried out at constant temperature of the atmosphere around the material, preferably higher than the storage temperature of the material but lower than the degradation temperature of its components. As a result, biological product dehydration consists in anabiotic interruption of life processes, which can be later restored.
The dehydration device according to this solution constitutes a physically and thermally closed system consisting of the dehydration chamber (1) in the form of a tunnel of a rectangular, triangular or circular cross-section, connected by means of ducts (2) and (3) - i.e. by means of an inlet and an outlet duct - with a heat exchanger (14) and with a blower (5). Dehydration chamber walls and duct walls are thermally insulated. The heat exchanger is connected with a heat generator located outside the system. The heat generator is a heater or a radiator and can be powered for instance by gas, electricity or solar energy. It can also be an electrophotovoltaic device or a condenser device.
The device is fitted with a system for maintaining temperature gradient between the heat exchanger (14) and the dehydration chamber (1) that forces gas medium flow at preset pressure. The device is also fitted with a system for permanent monitoring of the parameters of the dehydration process and for collecting product samples during the process.
The quantitative dry matter composition of the chemical product obtained using the method according to the discussed invention is essentially the same as the chemical composition of the dry matter of the product before drying.
Furthermore, biological products retain the biological structure of fresh products. Products in the form of a dried mixture of biological materials have the same dry mass composition and biological structure as a mixture of fresh products.
According to the patent description, this method of dehydration can be used with biological products such as fruits, vegetables, meat, seafood, dairy products such as milk and eggs, herbs, spices and seeds, tea, coffee and cocoa, tobacco, fodder, wood, peat; as well as biological materials, such as blood and sperm; vaccines, bacteria, carcinogens, various kinds of chemical compounds and pharmaceutical substances.
The method according to the invention is used for dehydrating fresh fruit and vegetables, such as apples, pineapples, watermelons, grapes, carrots, broccoli, containing 75-90% of water.

Research focusing on developing a dehydration technique combining the advantages of sublimation (lyophilization), i.e. high product quality, and convective techniques characterized by low cost of the process, has continued for many years. The objective of the invention was to develop such a drying solution that first of all preserves the natural properties (taste, aroma, vitamins, texture) of the product processed using the new technology.

The subject matter of the present invention is a process of dehydrating biological products based on a method of drying under pressure whereby the product is treated with a gaseous medium the movement of which is forced about the dried product in a closed system under appropriate pressure, while the temperature of the medium circulating in the system is different than the temperature of the treated product, until the moisture content in the product is reduced to the desired level; the dehydration process is carried out at constant temperature of the atmosphere around the material, preferably higher than the storage temperature of the material but lower than the degradation temperature of its components.
According to the essence of the invention, the drying process is carried out in a dehydration chamber where the processed product is placed on drying trays arranged on at least one rack with shelves fitted with heating surfaces, whereby at the beginning of the drying process the gaseous medium is nitrogen at a temperature of 30°C to 50°C, and at a pressure of 1.1 to 1.4 Pa inside the dehydration chamber. The material undergoes two processes at the same time - the process of exposure to moving gas medium that flows through a biological product bed at super-atmospheric pressure and at a preset temperature from 30° to 50° and the process of desorption drying caused by the shelves' heating surfaces.
The dehydration process has several stages, characterized as follows:
- at the preliminary stage products are being prepared for drying; to that end biological products are being sorted into grades by separating products based on their common features; subsequently sorted products of a certain grade are being placed on appropriate drying trays so that the size of their perforation openings corresponds to the size of the product, and then each drying tray is placed on the heating surfaces of the rack's shelves, following which the door of the dehydration chamber is tightly shut;
- at the next stage, injectors are activated and nitrogen is fed into the chamber; the next stage can begin after a certain time, not to be shorter than 9 minutes;
- all elements of the device are activated and the stabilization and control system automatically adjusts all parameters of the dehydration process, such as temperature, humidity and pressure inside the dehydration chamber, thus initiating the process of dehydrating the biological product which - by means of the gas circulation system and heating system - is simultaneously subjected to two processes: the, process of dried material exposure to moving gas medium that flows through a biological product bed at super-atmospheric pressure and at an appropriate temperature and the process of desorption drying consisting in heating the product to a temperature of 40 to 50°C using heat released by the heating system;
- when the dehydration process is over, the stabilization and control system automatically stabilizes all parameters, including adjustment of temperature and pressure level inside the chamber; the device is switched off, the door of the dehydration chamber is opened and drying trays with ready dried products are removed.
The heating fluid circulating in the heating system heats up the heating surfaces of the shelves that are in contact with the drying trays; in their turn, the drying trays heat up the biological product placed on them until product moisture content is reduced to the desired level.
Steam originating from the dehydrated product is removed from the dehydration chamber on a continuous basis through an upper opening to the condenser, and the condensate (in sterile conditions) is moved to a special tank located outside the dehydration chamber.
Biological products to be dried are fragmented for instance to halves, quarters, cubes, slices or strips and then placed on drying trays in single layers.
Preferably, biological products to be dehydrated should be fresh and raw (at a temperature of approximately +10°C) or - even more preferably - they should be frozen (at a temperature down to -30°C), which protects the product against enzymatic changes.
Before the beginning of the dehydration process, the rack with heating surfaces of the shelves is located outside the dehydration chamber to facilitate placement of drying trays on heating surfaces. Once loaded, the rack is introduced into the dehydration chamber.
The gaseous medium flows bottom-up through the dried material bed through openings in the drying trays.

The subject matter of the invention also includes a device for dehydrating biological products (particularly foods) using the method according to the invention, constituting a physically and thermally closed unit consisting of an airtight dehydration chamber fitted with a door and connected by ducts to a condenser; inside the chamber there is a heat exchanger connected with an external heat generator and horizontal drying trays arranged one over another; the device is fitted with means of delivering the required gases and/or bacteriostatic agents to the chamber's interior as well as with a system for forcing the flow of the gaseous medium at a certain pressure; furthermore, the device has an automated stabilization and control system for monitoring dehydration process parameters.
According to the invention, the device has a heat exchanger in the form of the entire supporting structure of the rack filled with a heating fluid; the exchanger is detachably connected via supply and discharge pipelines with a heater located outside the dehydration chamber. The rack has shelves with heating surfaces on which drying trays filled with dehydrated material are placed. Furthermore, the device has a system for injecting nitrogen to the dehydration chamber's interior, consisting of a nitrogen tank located outside the dehydration chamber. The tank is connected by means of tubes with injectors located near the dehydration chamber's floor. In the rear wall of the dehydration chamber (at the level of each shelf with trays) there are fans (preferably turbine fans) with individual output adjustment, used for blowing the gas medium to the inside of the dehydration chamber, into spaces between the drying trays.
The connection of the rack with supply and discharge pipelines can be detached by means of a coupling (preferably a self-locking coupling).
Drying trays are perforated; perforation can take the form of holes, openwork, mesh, or similar.
In addition, drying trays are coated with a protective layer and framed with an insulation element.
The entire dehydration chamber has thermal insulation made of polyurethane foam or a Styrofoam layer. Furthermore, it is insulated with a moisture barrier and its interior is lined with watertight elements.

An advantage of the biological product dehydration device according to the invention is that by using two systems (forced air and heating) it allows for uniform and simultaneously the most optimum and efficient drying of biological products all over the dehydration chamber, so as to prevent the common problem of product overheating; such overheating has been a significant technical problem for many years, always resulting in product nutritional value loss, distortion of the essential chemical composition of the material and changed taste, aroma and color.
It is generally known that drying intensity is variable and depends on the given stage of the drying cycle. While in the first stage moisture is removed from the product's surface (from layers near the surface), in subsequent stages the central part of the product is being dried, which means that steam has to diffuse through thick product layers. If drying is too quick and intense, water diffusion from deeper layers is slower than diffusion from the surface, which results in the formation of a kind of a hard, non-permeable shell on the dried product surface on the one hand, and inadequately dried interior on the other.
To ensure adequate drying speed it is necessary to intensively supply heat while preserving small (low) temperature differences; the goal is to prevent overheating and product nutritional value loss.
Another significant improvement of the closed-system biological product drying process is the introduction of additional heating between the rack's heating surfaces. As a result, intensive drying of soft products at low temperature differences has been ensured. Furthermore, indisputable advantages of the device according to the invention include the possibility to use various drying trays with various perforations and shapes that allow for drying graded products. As a result, drying can be more intensive.
By using an innovative biological product dehydration method using the dehydration device according to the invention, very good dried product parameters have been obtained. In fact, the device's design allows for drying any kind of food materials down to the dry matter level. After drying, water content is very low (1-2%, identical to lyophilization), which protects the product against spoilage. The product is not hygroscopic (it does not absorb moisture from its environment) and is immune to mold. It preserves its natural shape, structure and all values - vitamins, aromas and undoubtedly taste - first of all, it is characterized by a crunchy skin and a slightly moist interior with soft yet crunchy porous structure of the parenchyma. Simultaneously, it retains moisture for longer, which gives an impression of freshness even after many days or weeks. The color tone of the dried product is only slightly changed in comparison to the color of the fresh product. The resulting dried product is also characteristic for fast rehydratation, which means that its original condition can be easily restored in a matter of few minutes after soaking with water.

The dryer according to the present invention can be used by small manufacturers and by households for drying all kinds of agricultural produce, including in particular dehydration of soft vegetables and fruits, i.e. those with a fully fleshy pericarp (such as berries) or at least a pericarp partially made of parenchyma (such as drupes), or soft vegetables (such as Solanaceae, Cucurbitaceae, Brassicaceae or bulb vegetables). The invented drying method allows for very efficient dehydration of such fruits as cranberry, black and red currant, aronia (chokeberry), blueberry, grape, pear, apple, pineapple, watermelon, sweet and sour cherry, plum, blackberry, raspberry, strawberry, peach, apricot or such diverse vegetables as pumpkin, tomato, cucumber, olive, potato, bell pepper, broccoli, cauliflower, Brussels sprout, pea, onion, leek, etc. The method works well with herbs (for instance nettle, chive, dill) and mushrooms. However, the device cannot be used with high capacity line production as part of large scale industrial production.

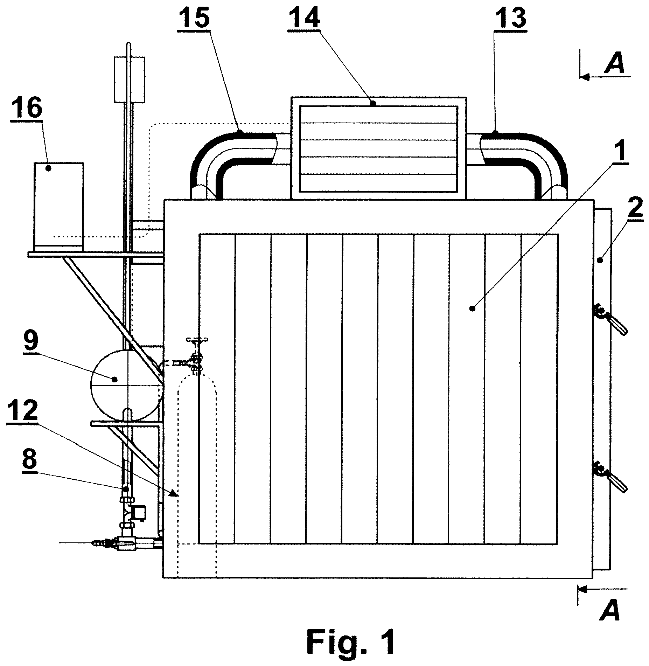

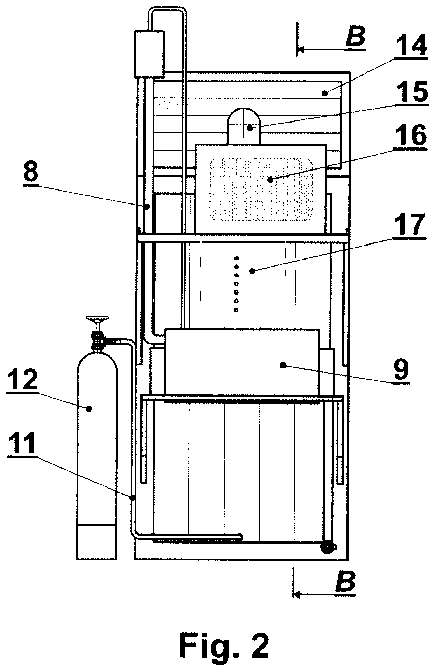

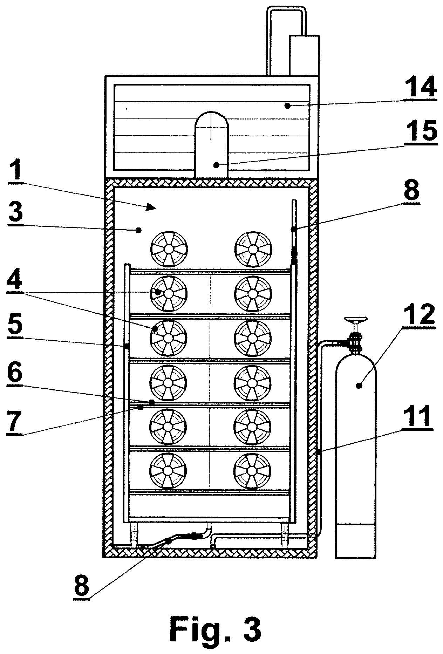

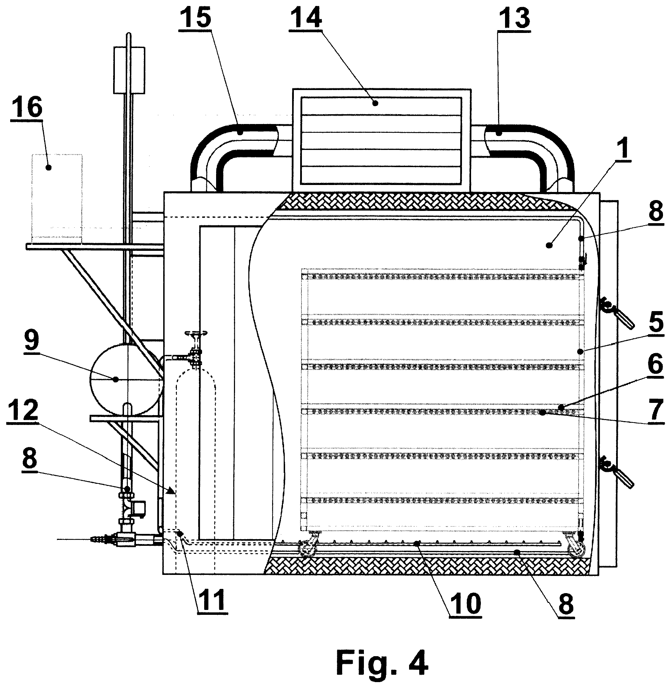

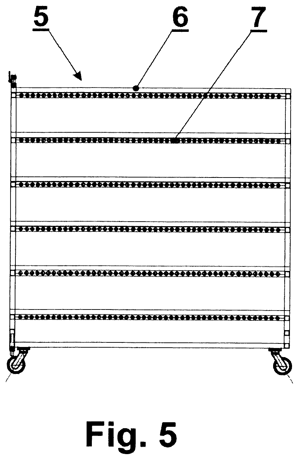

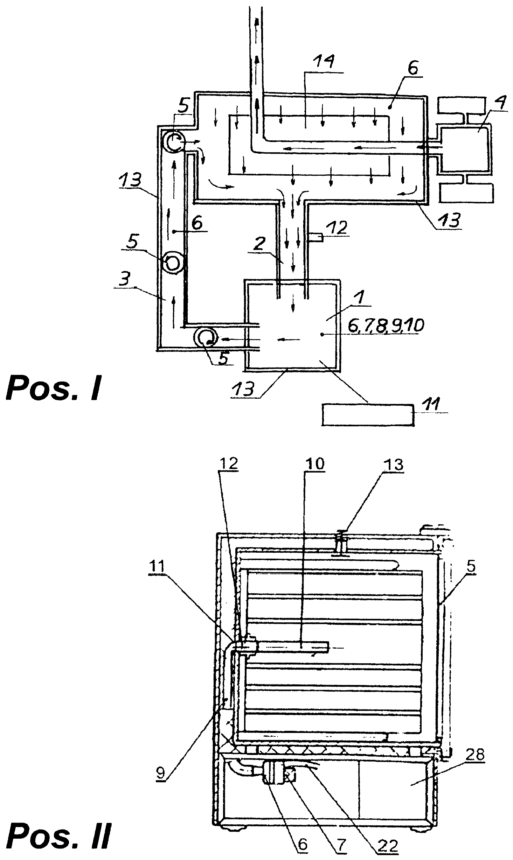

One embodiment of the subject matter of the invention is presented in the drawing, where Fig. 1 shows the front view of the dehydration device according to the invention, Fig. 2 shows the side view of the same dehydration device, Fig. 3 shows the cross-section of the device along the A-A line shown in Fig. 1, Fig. 4 shows a partial view and a partial section along the B-B line shown in Fig. 2 and Fig. 5 shows the side view of the rack.

The inventor has built a device for biological product dehydration consisting of three systems: forced air system, heating system and stabilization and control system. The device has a dehydration chamber **1** made of acid resistant steel, thermally insulated with a Styrofoam layer (not shown in the drawing). Furthermore, the dehydration chamber **1** is insulated with a moisture barrier (not shown in the drawing) and its interior is lined with watertight elements (not shown in the drawing). The dehydration chamber **1** is opened and closed by means of an airtight door **2**. The rear wall **3** of the dehydration chamber **1** features turbine fans **4** with individual output adjustment, for controlling the movement of gases in the forced air system.
While the device is in operation, inside the dehydration chamber **1** there is a rack **5** of a tubular design, with six shelves **6** with heating elements **7**, made of parallel tubes in which water circulates. On each of the shelves **6** perforated drying trays (not shown in the drawing) are placed. Moist material to be dried is placed on the trays. The drying trays are made of copper, coated with a protective layer and framed with an insulation element.
The rack **5** and the heating elements **7** of the shelves **6** is detachably (by means of self-locking couplings, not shown in the drawing) connected through ducts **8** with a heater **9** located outside the system. The rack **5** serves both as a dryer cart and a heat exchanger in the heating system. Inside the dehydration chamber **1** there are also elements of a system that supplies nitrogen to the chamber's interior, namely injectors **10** connected through a duct **11** with a nitrogen tank **12** located outside the system.
During the dehydration process, a moist gaseous agent is evacuated through an outlet duct **13** to a condenser **14** located above the dehydration chamber **1**, and then returns in a closed-loop system through a supply duct **15** to the system and is forced by means of fans **4** back to the dehydration chamber **1**.
The condenser **14** is connected by means of a hose with a water tank **16** that collects water from steam condensation. The water tank **16** has a graduated scale (not shown in the drawing) for monitoring the amount of water evaporated from the dried biological product.
The device is additionally fitted with a stabilization and control system **17** located on one of the outer side walls of the dehydration chamber **1**, allowing for monitoring the humidity and pressure inside the dehydration chamber **1**.

The device for biological product dehydration was used for drying a batch of 100 kg of frozen raw aronia (chokeberry), at a temperature of approximately -10°C.
To that end, after initial preparation, the operator graded the fruits into two grades according to their diameter (one grade with diameters from 8 to 10mm and the other grade with diameters below 8mm). Subsequently the operator put the fruits, without fragmentation, on applicable drying trays, in single layers, so that the tray perforation matched product diameters, and then placed each drying tray on the heating elements **7** of the shelves **6** of the mobile rack **5** fitted with wheels. The rack was in the same room but outside the device. Subsequently, the operator introduced the loaded rack **5** into the dehydration chamber **1** and tightly shut the door **2** of the dehydration chamber **1**. Then he started the injectors **10** that began pumping nitrogen accumulated in the cylinder **12** into the dehydration chamber **1** and then he waited for 10 minutes for the atmosphere inside the dehydration chamber **1** to change, thus eliminating aerobic bacteria. Nitrogen temperature was +40°C.
The next stage involved initiation of all components of the device; the stabilization and control system **17** automatically adjusted all dehydration process parameters, including temperature, humidity and pressure inside the dehydration chamber **1**, which reached the intended level of 1.2Pa. The process of dehydration of moist aronia began. The fruits were simultaneously subjected to two processes effected by two systems (forced air system and heating system), i.e. exposure to forced nitrogen (and then air) with simultaneously executed desorption drying process consisting in increasing the temperature of the fruits to +45°C using thermal energy released from the heating system by the heating elements **7** of the racks **6** that were in contact with the drying trays. As a result of this double action, the fruits were being dehydrated until the moisture content was reduced to the target humidity level of less than 2%.
Throughout the entire dehydration cycle water was evaporating from the fruits and steam originating from the dehydrated product was evacuated from the chamber **1** on a continuous basis by means of a water condensation system constituted by the upper opening and outlet duct **13** and condenser **14**; the condensate (in sterile conditions) was moved to the special tank **16** located outside the dehydration chamber **1**. The dehydrated gaseous medium returned to the dehydration chamber **1** through the supply duct **15**.
When the dehydration process was completed, the operator used the stabilization and control system **17** to stabilize all parameters, including adjustment of temperature and pressure inside the dehydration chamber **1**, and then switched off the device. Subsequently, he opened the door **2** of the dehydration chamber **1**, removed the rack **5** from the dehydration chamber **1**, and individually took out each drying tray with ready dried aronia.

In another production cycle the device for biological product dehydration according to the present invention was used for drying a 50 kg batch of raw fresh carrots at a temperature of approximately +8°C.
To that end, after initial preparation consisting in washing the carrots with pressurized water followed by bacteriostatic and antifungal treatment, the operator diced the carrots using a vegetable chopper to 7 x 7 mm dices. Subsequently he put the diced carrots on the drying trays in single layers. Then he placed each drying tray on the heating elements **7** of the shelves **6** of the mobile rack **5** fitted with wheels. The rack was in the same room but outside the device. Subsequently, the operator introduced the loaded rack **5** into the dehydration chamber **1** and tightly shut the door **2** of the dehydration chamber **1**. Then he started the injectors **10** that began pumping nitrogen accumulated in the cylinder **12** into the dehydration chamber **1** and then he waited for 9 minutes for the atmosphere inside the dehydration chamber **1** to change, thus eliminating aerobic bacteria. Nitrogen temperature was +35°C.
The subsequent stages of the dehydration process were similar to those in the previous example, but the pressure inside the dehydration chamber **1** reached the level of 1.4Pa, and carrot temperature reached +40°C. Moisture content in the dried vegetables was reduced to less than 3%.

### Key

- 1: - dehydration chamber
- 2: - chamber door
- 3: - rear wall of dehydration chamber
- 4: - fan
- 5: - rack
- 6: - shelf
- 7: - heating element
- 8: - heating system duct
- 9: - heater
- 10: - injector
- 11: - nitrogen system duct
- 12: - nitrogen tank
- 13: - moist gaseous medium outlet duct
- 14: - condenser
- 15: - dehydrated gaseous medium inlet duct
- 16: - water tank
- 17: - stabilization and control system

## Claims

1. A process of dehydration of biological products using the pressurized drying method in which the product is treated with a gaseous medium the movement of which over the dried product is forced in a closed system under appropriate pressure, in the presence of a difference between the temperature of the medium circulating in the system and the temperature of the dried product until the product moisture content is reduced to the desired level, and in which the dehydration process is executed at a constant temperature of the atmosphere surrounding the material, preferably higher than its storage temperature but lower than the degradation temperature of its components **characterized in that** the process is carried out in a dehydration chamber where the dried product is placed on drying trays arranged on at least one rack with shelves fitted with heating surfaces, whereby at the beginning of the drying process the gaseous medium is nitrogen at a temperature of 30°C to 50°C, and at a pressure of 1.1 to 1.4 Pa inside the drying chamber, and the material undergoes two processes at the same time - the process of exposure to moving gas medium that flows through a biological product bed at super-atmospheric pressure and at a preset temperature from 30° to 50°_{[S7]} and the process of desorption drying caused by the shelves' heating surfaces.

2. The process of claim 1 **characterized in that** it is executed in several stages which are as follows:
a) at the preliminary stage products are being prepared for drying; to that end biological products are being sorted into grades by separating products based on their common features; subsequently sorted products of a certain grade are being placed on appropriate drying trays so that the size of their perforation openings corresponds to the size of the product, and then each drying tray is placed on the heating surfaces of the rack's shelves, following which the door of the dehydration chamber is tightly shut;
b) at the next stage, injectors are activated and nitrogen is fed into the chamber; the next stage can begin after a certain time, not to be shorter than 9 minutes;
c) all elements of the device are activated and the stabilization and control system automatically adjusts all parameters of the dehydration process, such as temperature, humidity and pressure inside the dehydration chamber, thus initiating the process of dehydrating the biological product which - by means of the gas circulation system and heating system - is simultaneously subjected to two processes: the process of dried material exposure to moving gas medium that flows through a biological product bed at super-atmospheric pressure and at an appropriate temperature and the process of desorption drying consisting in heating the product to a temperature of 40 to 50°C using heat released by the heating system;
d) when the dehydration process is over, the stabilization and control system automatically stabilizes all parameters, including adjustment of temperature and pressure level inside the chamber; the device is switched off, the door of the dehydration chamber is opened and drying trays with ready dried products are removed.

3. The dehydration process of claim 1 **characterized in that** the heating fluid circulating in the heating system heats up the heating surfaces of the shelves that are in contact with the drying trays, and in their turn, the drying trays heat up the biological product placed on them until product moisture content is reduced to the desired level.

4. The dehydration process of claim 1 **characterized in that** the steam originating from the dehydrated product is removed from the dehydration chamber on a continuous basis through an upper opening to the condenser, and the condensate (in sterile conditions) is moved to a special tank located outside the dehydration chamber.

5. The dehydration process of claim 1 **characterized in that** biological products to be dried are fragmented for instance to halves, quarters, cubes, slices or strips.

6. The dehydration process of claim 1 **characterized in that** biological products are placed on drying trays in single layers.

7. The dehydration process of claim 1 **characterized in that** prior to the beginning of the dehydration process the rack with heating surfaces of the shelves is located and the drying trays are placed on the heating surfaces outside the dehydration chamber, and only thereafter the rack is introduced inside the dehydration chamber.

8. The dehydration process of claim 2 **characterized in that** the gaseous medium flows bottom-up through the dried material bed through openings in the drying trays.

9. A device for dehydration of biological products (particularly foods) constituting a physically and thermally closed system consisting of an airtight dehydration chamber fitted with a door and connected by means of ducts with a condenser, inside of which a heat exchanger is placed connected with a heat generator located outside the system and horizontal drying trays arranged one above another, such device being fitted with means of delivering the required gases and/or bacteriostatic agents to the dehydration chamber as well as with a system for forcing the flow of the gaseous medium at a certain pressure; furthermore, the device has an automated stabilization and control system for monitoring dehydration process parameters, **characterized in that** it has a heat exchanger in the form of the entire supporting structure of the rack (**5**) filled with a heating fluid, and the exchanger is detachably connected via supply and discharge pipelines with a heater (**9**) located outside the dehydration chamber (**1**), and additionally the device has a system for injecting nitrogen to the interior of the dehydration chamber (**1**), consisting of a nitrogen tank (**12**) located outside the dehydration chamber (**1**), connected by means of ducts (**11**) with injectors (**10**) located near the floor of the dehydration chamber (**1**) and additionally inside the dehydration chamber (**1**) there are fans (**4**) arranged in the rear wall of the chamber at the level of each shelf (**6**) with drying trays.

10. The device of claim 9 **characterized in that** the dehydration chamber (**1**) has thermal insulation in the form of a layer of polyurethane foam.

11. The device of claim 9 **characterized in that** the dehydration chamber (**1**) has thermal insulation in the form of a layer of Styrofoam.

12. The device of claim 9 **characterized in that** the dehydration chamber (**1**) is insulated with a moisture barrier and its interior is lined with watertight elements.

13. The device of claim 9 **characterized in that** it has fans (**4**) with individual output adjustment.

14. The device of claim 9 **characterized in that** the connection of the rack (**5**) with supply and output ducts is detachable, by means of a coupling.

15. The device of claim 14 **characterized in that** the coupling is self-locking.

16. The device of claim 9 **characterized in that** the drying trays are perforated.

17. The device of claim 16 **characterized in that** the perforation of the drying trays has the form of punched elements.

18. The device of claim 16 **characterized in that** the perforation of the drying trays has the form of openwork elements.

19. The device of claim 16 **characterized in that** the perforation of the drying trays has the form of mesh-like elements.

20. The device of claim 9 or 16 or 17 or 18 or 19 **characterized in that** the drying trays are coated with a protective layer.

21. The device of claim 9 or 16 or 17 or 18 or 19 **characterized in that** the drying trays are framed with an insulation element.
